# EUROPEAN PATENT SPECIFICATION

(11) **EP 1 466 193 B1**
(45) Date of publication and mention of the grant of the patent: **26.09.2012**
(21) Application number: 03731635.3
(22) Date of filing: 16.01.2003
(51) Int. Cl.: G01V 15/00, G08B 13/24, G06K 7/08, G06K 7/00

(54) **A SYSTEM AND METHOD FOR COMMUNICATING WITH ELECTRONIC LABELS**
SYSTEM UND VERFAHREN ZUR KOMMUNIKATION MIT ELEKTRONISCHEN LABELS
SYSTEME ET PROCEDE POUR LA COMMUNICATION PAR ETIQUETTES ELECTRONIQUES

(30) Priority: 16.01.2002 AU 2002009962; 18.01.2002 AU 2002000009; 21.01.2002 AU 2002000034
(43) Date of publication of application: 13.10.2004
(73) Proprietor: Tagsys SA, 13821 La Penne-sur-Huveaune (FR)
(72) Inventor: COLE, Peter, Harold, West Lakes Shore, South Australia 5020 (AU)
(74) Representative: Allsop, John Rowland
(86) International application number: PCT/AU2003/000036
(87) International publication number: WO 2003/062861

(56) References cited:
- EP-A- 0 750 201
- WO-A-89/07772
- WO-A1-99/56414

## Description

### Field of the Invention

The present invention relates to a system and method for communicating with electronic labels. The invention relates particularly, but not exclusively, to a system and method for communicating with electronic labels attached to objects.

### Background of the Invention

Electronic labels are devices which are able to be attached to various objects so that information relating to these objects, stored on the electronic label, may be easily obtained. Therefore, one may affix labels to objects such as assets, animals, and people so that the information may be obtained using a wireless device such as an interrogator.

An electronic labelling system for managing objects having electronically coded labels may be of a type in which information passes between an interrogator, which creates an electromagnetic interrogation field, and electronically coded labels ('the labels') which are able to respond by issuing a reply signal which is able to be detected by the interrogator and possibly supplied to other apparatus.

In normal operation the labels may be passive (that is, the labels have no internal energy source and obtain energy for their reply from the interrogation field), or active (that is, the labels contain an internal energy source, for example a battery) and respond only when they are within, or have recently passed through, the interrogation field which may have the function of signalling to an active label when to commence a reply or a series of replies.

It appears that a common problem in existing electronic label systems is that when an unknown plurality of labels are simultaneously present in an interrogation field, a communication process between the interrogator and label may be required to be structured so that all of the labels present in the interrogation field are able to be detected, often within a short time.

A protocol for communicating with an unknown plurality of labels simultaneously present in an interrogation field may be of the type described in patent application PCT AU 92 00143 (the '143 application). The '143 application describes a protocol in which labels may repeat their replies intermittently and at varying intervals with spaces between the replies significantly greater than the duration of a reply, so that over time all replies may be detected without interference. Whilst the protocol described in the '143 application has an advantage of requiring little or no signalling for the interrogator, the protocol exhibits poor performance when there is a large number of labels simultaneously in the interrogation field.

In other multiple label read protocols, such as disclosed in PCT AU 98 00017, PCT AU 00 01493 and PCT AU 01 01676, significant signalling from the interrogator to each electronic label is required because of a need to keep label circuits simple.

In multiple label read protocols of the type disclosed in PCT AU 98 00017, PCT AU 00 01493 and PCT AU 01 01676 there is disclosed an interrogator signalling scheme which employees amplitude modulation of an interrogator powering and carrier signal ('the interrogator signal') to thereby provide 'dips' in the interrogation carrier power. The so called 'dips' are localised minima in the interrogator signal amplitude which have been produced by amplitude modulating the interrogator powering and carrier signal using a modulating signal which includes command or data content.

When the interrogator signal frequency is too high to provide a convenient time reference in a label circuit, an oscillator (herein referred to as an 'on-chip oscillator') may be included in the label to provide a timing reference against which details of interrogator signal encoding (for example, the signal dips) are able to be examined so as to extract command or data content.

However, due to manufacturing tolerances and/or substantial variation in excitation levels experienced by labels as they pass through the interrogation field at various orientations, on-chip oscillators may suffer from poor frequency stability. Such poor frequency stability may make the label susceptible to extracting incorrect command or data information from the interrogator signal.

When the interrogator carrier frequency is low enough, the above-described problem (that is, the extraction of incorrect command or data information) may be avoided by deriving timing within the label itself. Although this reduces the chances of misunderstanding by the label of interrogator signalling, the associated amplitude modulation pulses of the interrogation carrier may then occur at intervals which are multiples of the inverse of a fundamental frequency, with the result that may introduce prominent signalling sidebands into the spectrum of interrogator signalling occur. Such sidebands may not comply with electromagnetic compatibility regulations.

As further representative prior art to which the reader is directed, reference may be made to disclose in WO99/564142 Micron Communications Inc. which relates to back-scatter interrogators in general. In this disclosure a back-scatter interrogator includes a data-path configured to communicate a data signal, a signal generator configured to generate a carrier signal and a modulator coupled with a data-path and the signal generator. The modulator is configured to spread the data signal to define and spread data signal and amplitude modulate the carrier signal using the spread data signal. The modulator is further configured to phase modulate the carrier signal.

It is an aim of the present invention to ameliorate at least some of the deficiencies of the prior art.

### Summary of the Invention

According to one aspect of the invention there is provided a system for communicating between an interrogation device and at least one electronic label device, the system including:
(a) an interrogation device for generating an interrogation field using an interrogation signal, the interrogation signal containing angle modulation and amplitude modulation, the amplitude modulation encoding the interrogation signal with information for communication to one or more of the electronic labels; and
(b) one or more electronic labels, each of the one or more electronic labels being locatable within the interrogation field and being capable of detecting and decoding the interrogation field so as to recover the information; characterized in that said interrogation device includes a carrier signal generator for generating an angle modulated carrier signal in the HF band, a random signal generator, a frequency modulation port of said carrier signal generator for receiving slowly varying frequency modulation signals from said random signal generator, a microprocessor for providing signals to the random signal generator to indicate when the output of the random signal generator is to remain constant and when its output is allowed to vary whereby the angle modulation of said angle modulated carrier signal is controllably varied so that the interrogation signal has a frequency spectrum which includes sidebands having reduced amplitudes.

According to a second aspect of the presenter there is provided a method of communicating between an interrogation device and at least one electronic label device, the method including:
(a) the interrogation device generating an interrogation field using an interrogation signal, the interrogation signal containing angle modulation and amplitude modulation, the amplitude modulation encoding the interrogation signal with information for communication to one or more of the electronic labels; and
(b) one or more electronic labels detecting and decoding the interrogation field to recover the information; characterized by generating an angle modulated carrier signal in the HF band by means of a carrier signal generator, providing slowly varying frequency modulations signals from a random signal generator, to said carrier signal generator by means of a microprocessor to indicate when the output of the random signal generator is to remain constant and when its output is allowed to vary whereby the angle modulation of said modulated carrier signal is controllably varied so that the interrogation signal has a frequency spectrum which includes sidebands having reduced amplitudes.

According to a third aspect of the present invention, there is provided an interrogation device for communicating with at least one electronic label device, the interrogation device including a transmitter for generating an interrogation field using an interrogation signal, the interrogation signal containing angle modulation and amplitude modulation, wherein the amplitude modulation encodes the interrogation signal with information for communication to one or more of the electronic labels, and characterized in that the transmitter is provided with a carrier signal generator for generating an angle modulated carrier signal in the HF band, a random signal generator, a frequency modulation port of said carrier signal generator for receiving slowly varying frequency modulation signals from said random signal generator, a microprocessor for providing signals to the random signal generator to indicate when the output of the random signal generator is to remain constant and when its output is allowed to vary, whereby the angle modulation of said angle modulated carrier signal is controllably varied so as to reduce the amplitude of the sidebands of the interrogation signal compared with an equivalent interrogation signal containing no angle modulation.

### Brief Description of the Drawings

The present invention will now be described in relation to various embodiments illustrated in the accompanying drawings. However, it must be appreciated that the following description is not to limit the generality of the above description.

In the drawings:
Figure 1 shows a block diagram of a multiple electronic label reading system according to a preferred embodiment of the present invention;
Figure 2 shows a state diagram showing label states in a multiples label reading protocol suitable for use with the preferred embodiment of Figure 1;
Figure 3 shows an example of interrogator signalling using dips in interrogator signal envelope;
Figure 4 shows a unitary pulse useful in HF signalling;
Figure 5 shows a schematic diagram of an interrogator dip detection circuit suitable for use in a preferred embodiment of the present invention;
Figure 6(a) shows an example of a label reply modulation which may be used for collision detection In a baseband modulation detected in an interrogator when a binary 1 is signaled;
Figure 6(b) shows an example of a label reply modulation which may be used for collision detection in a baseband modulation detected in an interrogator when a binary 0 is signalled;
Figure 6(c) shows an example of a label reply modulation which may be used for collision detection in a baseband modulation detected in an interrogator when different labels signal a binary 1 and a binary 0 at the same time;
Figure 7(a) shows how electromagnetic compatibility regulations impact upon both interrogation carrier frequency and its signalling sidebands;
Figure 7(b) shows the spectrum of an single frequency interrogation carrier which has been amplitude modulated to produce symbols at a constant rate;
Figure 8 is a phasor diagram showing how amplitude and phase may be varied during interrogator signalling;
Figure 9 shows and alternative phasor diagram showing how amplitude and phase may be varied during interrogator signalling;
Figure 10 shows how a sub-carrier frequency which is used to frequency modulate an interrogation carrier may be varied in time;
Figure 11 (a) shows a schematic diagram of a first preferred form of an interrogation device suitable for use with the present invention;
Figure 11 (b) shows a schematic diagram of a second preferred form of an interrogation device suitable for use with the present invention; and
Figure 12 shows an example of the effect of the inventive method on a single spectral line of a sideband

### Detailed Description of the Invention

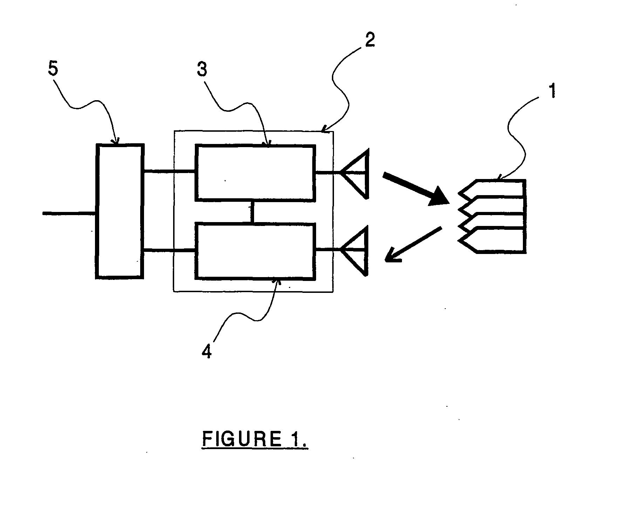

Figure 1 shows a simplified block diagram of a system for communicating with one or more electronic labels 1. As is shown, the system includes an interrogation device 2 (herein referred to as the interrogator) which is capable of generating an interrogation field in which the electronic labels 1 (`the labels') are able to be located.

As will be described in more detail later, the interrogation field contains angle modulation and amplitude modulation such that the amplitude modulation encodes the interrogation signal with information for communication to one or more of the electronic labels and the angle modulation is controllably varied so that the interrogation signal has a frequency spectrum which includes sidebands having reduced amplitudes.

In the preferred embodiment of the invention, the interrogation field is generated using an interrogation signal which is produced by angle modulating a carrier signal. The angle modulated carrier signal is then amplitude modulated using a modulating signal so as to encode the signal with the information in the form of a plurality of symbols, each symbol being represented using a pattern of modulation in the amplitude of the interrogation signal.

Preferably, the interrogator signalling is arranged so as to have an adequate amplitude so as to allow simple decoding by the labels, but is constructed in their amplitude and phase behaviour so that firstly the carrier frequency envelope has the required shape for simple detection by the relatively wide band detector which is practical within the label, and secondly the spectrum of the interrogator signalling is of a suitably uniformly low amplitude, lacking in prominent sidebands.

In a preferred form of the present invention, the interrogation field is generated by a transmitter 3.

In Figure 1 there is also illustrated a receiver 4 for receiving reply signals from the labels 1 and for decoding that signal.

The interrogator 2 preferably operates under the control of a controller 5 which is able to provide the decoded signal to external apparatus, and also manage an interrogation process.

The system illustrated in Figure 1 may be in an application which involves communicating with plural labels 1 using a suitable communications protocol.

Indeed, in a preferred embodiment of the invention, a Slotted Terminating Adaptive Round (STAR) communications protocol may be used.

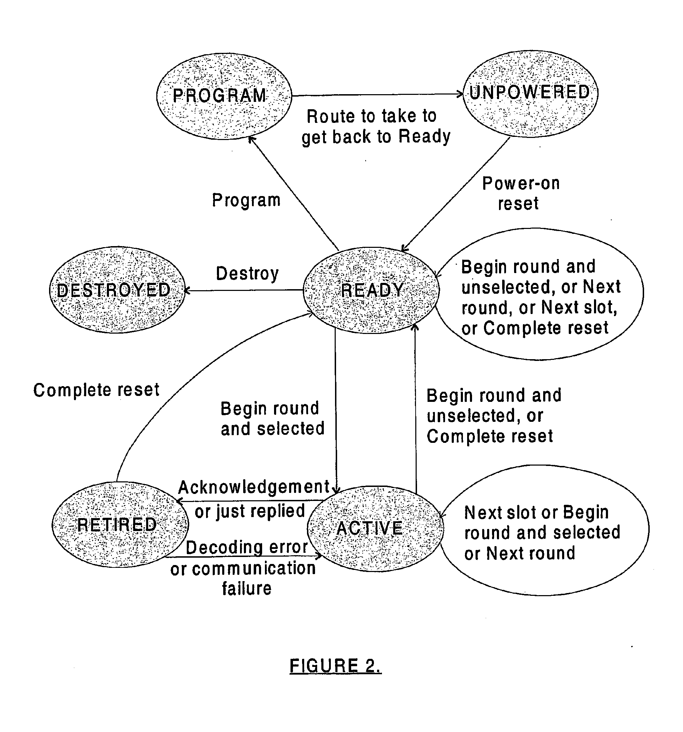

As is shown in Figure 2, in a Slotted Terminating Adaptive Round (STAR) communications protocol the labels 1 reply in time intervals (herein referred to as 'slots') which have their beginning and end under interrogator 2 control. An interrogator command may signal both the end of the current and the beginning of the next slot.

Labels 1 which enter an interrogation field created by the interrogation signal, after they have sufficient power for operation, wait before replying in a READY state for the reception of a Begin Round command, which may include a Label Selection command, from the interrogator 2. Such waiting constitutes a system operation which is consistent with what is known in the electronic labelling industry as the Reader Talks First (RTF) operating mode.

In this protocol the label having received a Begin Round command (possibly including a Label Selection command) enters a state which is referred to as the ACTIVE state, and then chooses at random a slot number in which to offer a reply out of a maximum number of slots in a serial group of slots referred to as a round. The number of slots in the round may be known to the label by any mechanism of internal information storage, or by an instruction carried within an interrogator command.

In a preferred embodiment of the invention, reply conditions within a slot can be separated into three categories:
(a) no label reply present ('the first case');
(b) one label reply present ('the second case'); and
(c) two or more label replies present ('the third case').

The first case (a) is known to the interrogator 2 by its waiting for a time known to the system in which a label reply should have commenced, and by its observing from an examination of the amplitude of signals in the receiver 4 that no reply has in fact commenced.

If no label reply is present the interrogator 2 may issue a Close Slot command which signals to all active labels (that is, those labels which have woken up and are therefore waiting for a match in their reply slot number and the current slot number in order to reply) to increment a current slot number.

In the second case (b), the label after having completed its reply may enter either automatically or in response to an interrogator signal into a state which is referred to as the RETIRED state. In this state the label no longer offers a reply even if there is a future match in its reply slot number and the current slot number. In this way this label has been eliminated from an active label population currently present in the interrogation field.

The interrogator 2 then signals to end the current slot and begin the next slot.

If there was an error in the reply the interrogator 2 issues an error signal which causes a label which has just replied to exit the RETIRED state and enter the ACTIVE state. The label, having entered the ACTIVE STATE, will wait out the rest of the current round and then, for the next round, calculate another random reply slot out of the maximum number of slots which are available for that new round.

The third case (c) is able to be identified by a property, to be explained below, of a modulation used in the label reply. In this case the two or more overlapping label replies are left to complete their replies after which the interrogator 2 issues an Error signal. Similarly to the situation as described for the second case, these labels will reply again next round, wherein they will have only a small probability of repeating their collision.

Each label 1 preferably includes on-board memory which is able to store identification data. The identification data may include data which is representative of a manufacturer and/or a label owner and/or or an object type. Thus, the labels 1 may have a selection feature in which groups of labels may be selected using the identification data. The interrogator 2 therefore may use a selection command which is able to contain label selection data ('the selection data').

Having received and decoded an interrogation signal which includes a selection command having label selection data, a label may compare the selection data with label identification data on baord the label on a bit by bit basis, either Most Significant Bit (MSB) first or Least Significant Bit (LSB) first.

When signalling of the selection data from the interrogator 2 stops, labels having identification data which matches the selection data are 'selected'. Labels which had a mis-match in one or more bits are 'not selected'.

A selected label which subsequently offers a reply, may reply with the remaining contents of the identification data, possibly rounded up to include any incomplete bytes, thus omitting all or most of the identification data used to select the label, and a cyclic redundancy code (CRC) which corresponds to the concatenation of the data used in the label selection, possibly rounded down to an integral number of bytes, and the data contained in its reply. This CRC will preferably be stored within the label memory, however, the CRC may be dynamically generated as part of an overall transaction.

A significant advantage of the above selection implementation is that label reply time is saved as the label reply need not contain most of the data broadcast by the interrogator 2 as part of label selection. The CRC also provides a measure of protection against communication errors caused by electromagnetic noise which causes interruptions in the interrogation field.

To properly manage reply rounds (and to coexist with other standards) a number of interrogator commands may be required. Examples of interrogator commands which may be provided in a protocol which is suitable for use with the present invention include:
(a) enter active state command;
(b) close empty slot command;
(c) retire command;
(d) error command;
(e) decoding error command;
(f) begin new slot command;
(g) change round size command; and
(h) begin new round command.

Other interrogator commands may also be provided, such as interrogator commands concerned with selecting a subset of labels to be included in a reply round.

In terms of the transmission of information (that is, command or data content), the information may be transmitted in widths or positions of pulses against a fixed time reference. As explained above, when the interrogator powering and carrier signal frequency is too high to provide in the label circuit a convenient time reference, as generally occurs in the UHF band, an on-chip oscillator may provide a timing reference against which details of interrogator signal dips are examined to extract their data content.

Stability of frequency of such oscillators in the face of manufacturing tolerances and the substantial variation in excitation level experienced by labels as they pass through the interrogation field at various orientations presents problems in the extraction of correct information.

Interrogator commands may be formed from Start Of Frames (SOF), binary or m-ary (m bits per symbol) data and End Of Frames (EOF). The SOF and EOF are violations in the signalling of normal data and are therefore able to be distinguished from normal data.

Checking integrity of data transmission from the interrogator 2 is able to be performed by the inclusion of a CRC within the label reply. The CRC may be calculated using both transmitted and received data. In a preferred embodiment, well suited to the achievement of label circuit simplicity, the CRC may be pre-loaded into memory on board the label, and does not need to be dynamically calculated.

The interrogator signalling may use separate symbols for SOF, EOF, 1, and 0. These symbols may be distinguished by the pulse width or by the spacing between pulses.

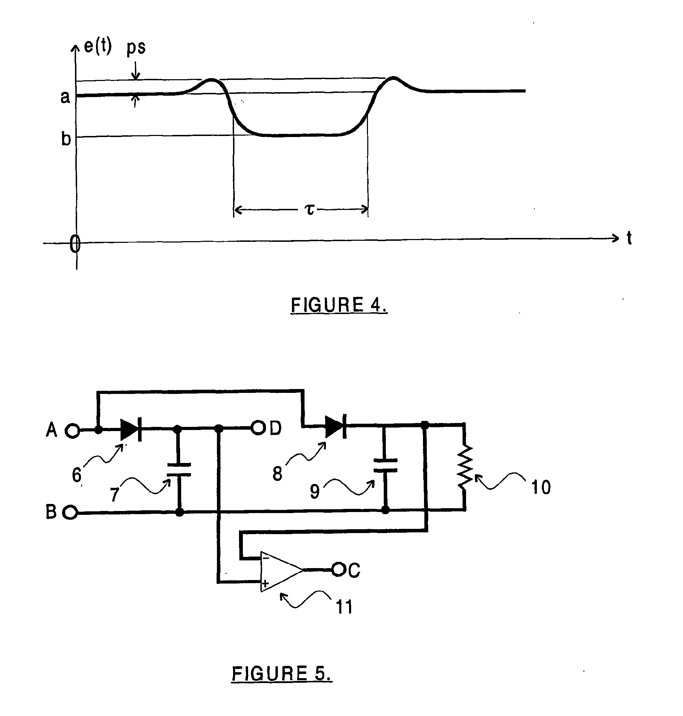

Alternatively, the interrogator signalling may use a unitary pulse which forms symbols by varying the time between pulses to create SOF, EOF, 1, and 0 symbols. Such signalling is illustrated in Figure 4.

A unitary pulse which forms symbols by varying the time between pulses, to create SOF, EOF, and m-ary symbols (m bits per symbol), may also be used.

Turning now to Figure 5, there is illustrated a circuit suitable for use in an electronic label for the detection of interrogator signalling dips, particularly short ones, as may suitable for use with a preferred embodiment of the invention.

In the illustrated circuit an alternating signal at the interrogation frequency is received at a pair of terminals A and B and is converted to d.c. energy in a first rectifier containing a diode 6 and reservoir capacitor 7. The rectifier supplies energising power to the remainder of the chip circuits via terminals labelled as D and B.

The reservoir capacitor 7 is made sufficiently large for it to supply without undue voltage sag energising power to the label circuit during the interrogator signalling dips. In the circuit the signal at the interrogation frequency received at terminals A and B is also converted to d.c. energy in a second rectifier containing diode 8 and reservoir capacitor 9. Capacitor 9 is made sufficiently small for the voltage across it to fall rapidly, when the interrogation signal undergoes one of its dips, under the influence of a load represented by circuit element 10 which may be a real resistor as depicted in the figure, a controlled current drain, or some other suitable electrical load mechanism.

The different behaviours of the two rectifiers allows the comparator 11 to produce at terminals C and B of Figure 5 an output pulse during a short interrogation signal dip but negligible output during the slow variations in interrogation signal level which occur when the label progresses normally through the interrogation field.

The recent emergence of standards for an Electronic Product Code, and other standards intended to promote widespread adoption of RFID labels, requires the development of very low cost remotely interrogatable electronic labels. To achieve the required low cost small microcircuits are required.

The requirement of simplicity of label circuits is such that it leads, as already explained, to information from the interrogator 2 to the label being signalled by amplitude modulation of the interrogator signal, such signalling being normally accomplished by having dips in the amplitude of the interrogator signal. Although the signalling of information from the interrogator to the labels will be described in terms of 'dips' it is to be understood that other forms of amplitude modulation signalling may be used.

Referring back to Figure 5, during the period of a dip, label circuits are as already explained, sustained by energy stored in the reservoir capacitor of the rectifier shown a capacitor 7. Dips should be maintained of low amplitude and be made short to minimise the size of the reservoir capacitor. Accordingly, in a preferred embodiment of the invention, the interrogation signalling dips are short in relation to their spacing.

It is also an advantage if the rise and fall times of the dips can be kept short in relation to their duration, as such shaping enhances the quality of the output of a dip detection circuit 11 of Figure 5. It is also helpful from this point of view if the dips can be preceded by and followed by a period of slightly greater interrogator signal amplitude (refer to ps in Figure 4) to provide extra charge on the reservoir capacitor before it enters the unpowered period, and to provide also rapid replenishment of that charge at the conclusion of a dip. Such shaping forms a significant contrast to that of the prior art.

For the design of label circuits, there are advantages in always timing from a falling edge. These derive from the different loads that are provided to the input terminals A and B of Figure 5 when signal amplitudes are rising or falling, this difference leading to different rise and fall times of rectifier outputs, which difference complicates detection of pulse widths, but not the detection of spacings between falling edges.

It can also be shown there is an advantage of having interrogator signal spacings which are multiples of the dip width τ (ref Fig 4). This will result in nulls of a Fourier transform of a single pulse coinciding with some peaks of a Fourier series associated with pulse positions, and avoid the generation of excessive amplitude spectrum lines. This is of advantage in some EMC jurisdictions.

One of the techniques for reducing sideband levels in a repeated signalling pattern is to choose, for the most commonly employed commands, signalling sequences with only a few pulses, this choice leading to a low duty cycle. Pursuing this policy, in a preferred embodiment of the invention, the close slot and next slot signals may be signalled by a single isolated dip. Also in pursuit of this policy, the symbol for binary zero has no dip at all.

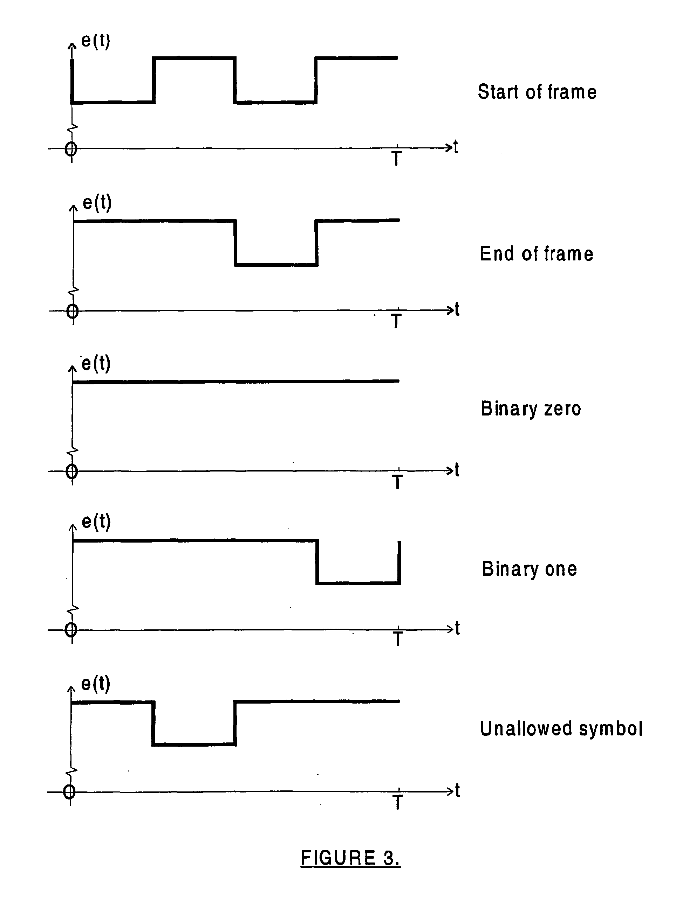

In one preferred embodiment of the invention where the interrogator energises the labels in the HF region, internal timing signals in the label may be derived from the interrogation carrier itself. It is then practical to employ the compact signalling of the type illustrated in Figure 3.

In the illustrated signalling there is a symbol period of duration of approximately 40 microseconds. Different symbols are generated by placing the unitary pulse, shown in Figure 4, in various positions in the symbol period T. Symbols for start of field, binary one, binary 0 and end of field are shown. We may notice that the binary zero is signalled by having no dip.

The width of the unitary pulse can be one-quarter of the symbol period T, or can be some other fraction thereof. Using a lesser pulse width is an advantage as the reservoir capacitor within the circuit can be made smaller.

The generation of a label reply signal may be accomplished by modulation, by circuits within the label, of the interrogation frequency powering carrier signal, so that a portion of the energy received by the label is scattered back from the label in a modulated form.

The modulation used by the label may have periods where the label is periodically loading and unloading its antenna for power receiving or for signal reflection, this operation being commonly referred to as backscatter, or periodically varying or not varying the amplitude of the signal produced by its retransmitting device in the case of a non-backscatter or non-electromagnetic label. In consequence there may be periods where no backscatter, reflection, or transmission occurs. The reply may thus be encoded with regions of modulation and regions of silence which may be within a bit signalling period, or may form any other duty cycle of modulation and silence over any number of bits.

In this way an apparent reply which can appear in the receiver of the interrogator as a result of superposition of two or more simultaneously replying labels (each containing different reply data), may, as will be explained shortly, exhibit an error.

The reply signal modulation method to be described has a particular advantage in protection against what is commonly referred to as the small signal capture or suppression effect, an effect whereby the received signals of two or more simultaneously replying labels which have large differences in their amplitudes results in the identification of only the larger amplitude reply when a modulation scheme without periods of silence is used. This type of error detection scheme works for modulation frequencies which may be synchronous to the interrogation field, may be approximately synchronous to an interrogator timing signal, or may be asynchronous in that they are self timed by the label's electronic circuits.

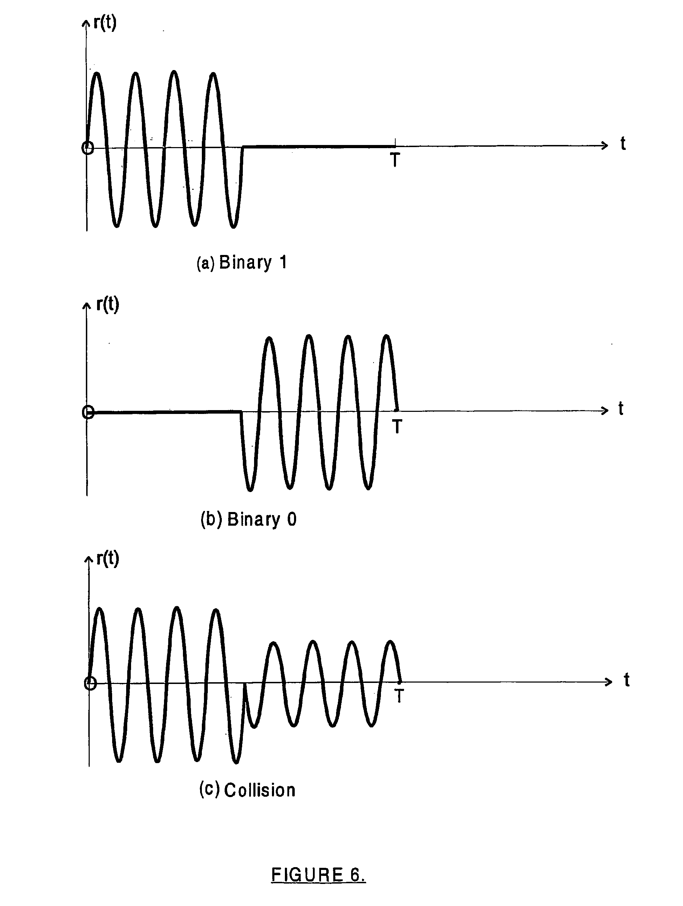

An illustration of a label reply modulation which may be used for collision detection is provided in Figure 6, which shows at Figure 6(a) a baseband modulation r(t) (herein referred to as 'the detected signal') detected in an interrogator when a binary 1 is signalled, in Figure 6(b) the detected signal when a binary 0 is signalled, and finally in Figure 6(c) the detected signal when different labels at the same time signal a binary 1 and a binary 0. The absence of a period of silence in a position in which one is expected is evident in the Figure.

In a particular embodiment, reply modulation is placed upon a reply sub-carrier, and the number of sub-carrier cycles in each expected period of silence is significantly greater than unity. This proportioning has the advantage that transients in the reply channel deriving from its limited bandwidth will decay to a sufficiently low amplitude for signals from a colliding label to be detected, even if the reply form that label is quite weak as a result for example of different propagation losses to and from different labels. This advantage occurs both when label timings are derived from the interrogation carrier, such as they may be when the interrogator operates in the HF region, and when label timings are derived from an independent oscillator within the label such as the may be when the interrogator operates in the UHF region.

Thus, an advantage of this form of reply signalling is that collisions between reply signals from different labels which produce very different reply signal strengths in the receiver of the interrogator may still be detected.

In the STAR protocol when such collisions are detected, the labels which have produced such a reply collision but have unknowingly automatically retired from the current round are provided by the interrogator with notice of an error signal, which has the consequence of the retired label re-entering a round.

Although as explained earlier they will not be read again in the current round, they will reply in a subsequent round, with a reduced probability of making a further collision.

A different class of interruptions in the interrogation field which is damaging to the efficient operation of a multi-read protocol are those which cause loss of operating voltage in the label electronics before all labels in the interrogation field are read. Such interruptions can be caused by the movements of the label or by signal reflections from nearby electromagnetically reflective surfaces and objects.

The result can be a loss in interrogation field at the label's location. The result can then be that a label already read may upon the restoring of power re-enter a round and compete for attention with labels not yet read, thus reducing the efficiency of a multiple read process. We incorporate by cross reference PCT AU/98/00017, Multiple Label Reading System, wherein it is explained that the impact of this phenomenon can be lessened by the use of a kernel or long term but still semi-volatile memory which retains information about the label's recent history, and in particular whether it was in an ACTIVE or RETIRED state when power was briefly lost as a result of the label movement or a deliberate field reorientation process. It is intended that in one preferred implementation of the STAR protocol such facility be provided in the label.

Normally, amplitude detection of the interrogation signalling in the label is employed, as it leads to the simplest label circuits.

According to the present invention, the carrier signal used to produce the interrogator signal is angle modulated and the angle modulation (that is the phase or frequency) is controllably varied during and/or between signalling periods.

More specifically, between periods of interrogator signalling, or between interrogator signalling dips, the phase of the interrogation carrier may be maintained constant, or may vary linearly with time, but during the period of signalling dips the phase of the interrogation carrier, relative to the phase of a steady interrogation carrier frequency, may be made to vary with time.

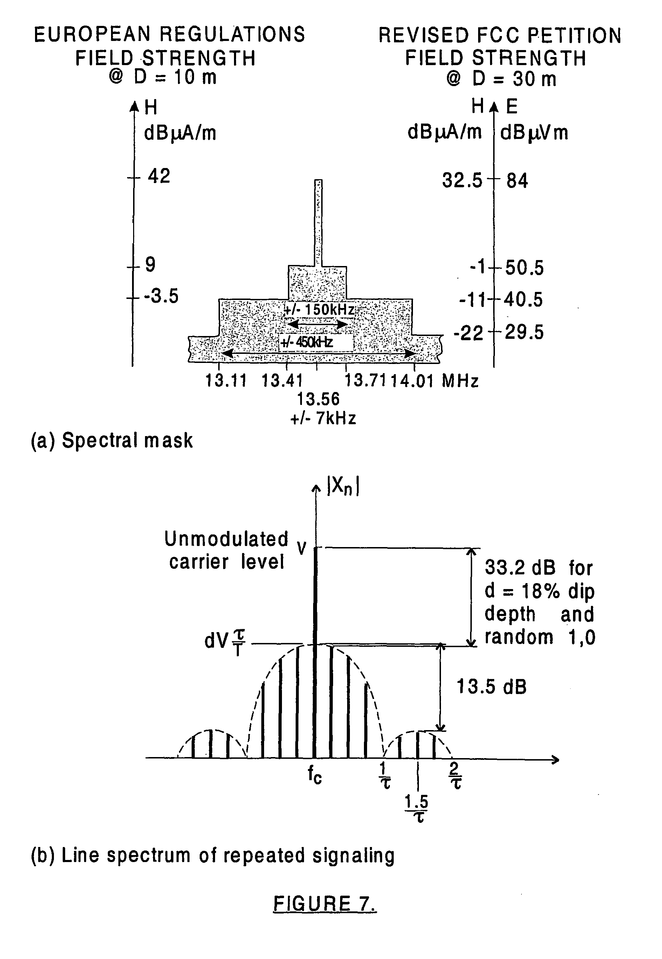

Aspects of electromagnetic compatibility regulations which have an impact upon interrogator signalling are shown in Figure 7(a), and the spectrum of a single frequency interrogator signal which has been amplitude modulated at regular symbol rate is shown in Figure 7(b).

Figure 7(a) also shows the regulations at present in force in one jurisdiction, and proposed for another. From Figure 7(a) it may be noted that interrogator signals for RFID (radio frequency identification) systems are allowed to be of significant amplitude in a narrow band known at the HF ISM band, but the sidebands which necessarily arise when the interrogator signal is modulated at a rate sufficiently rapid to be useful in multiple label reading are confined to quite a low level.

The importance of this matter is about to increase as proposals to regulators for an increase in the allowed power level for the interrogation carrier are currently being made, with no corresponding increase in the level of side band signalling being contemplated. The effect will be to increase the range at which are RFID labels may be powered, but that the same time to more severely constrained the relative amplitude of signalling sidebands.

As already stated, the spectrum of a constant interrogation frequency which has been amplitude modulated at a regular rate with symbols of the type illustrated in Figure 3 and Figure 4 is shown in Figure 7(b). Several things may be noted. One is that there is a general fit of the shape of the spectrum to the spectral mask shown in Figure 7 (a). Another is that the spectrum, contains spectral lines of which the level of the sidebands has already been reduced through the adoption of a small modulation dip depth of 18 percent, and the adoption of no dip at all when a binary zero is signalled.

The illustrated spectrum would no longer satisfy electromagnetic compatibility regulations if the relative amplitudes of the central spectral lines and the signalling sidebands were changed by a significant amount (for example, 20 dB) which is being proposed to the regulators.

Thus, the preferred embodiment of the invention adopts frequency or phase modulation of the interrogation carrier to change the nature of the spectrum illustrated to thereby reduce the amplitudes of the sidebands. Preferably, the reduction of the amplitude of the sidebands results in minimising the amplitude of the sidebands.

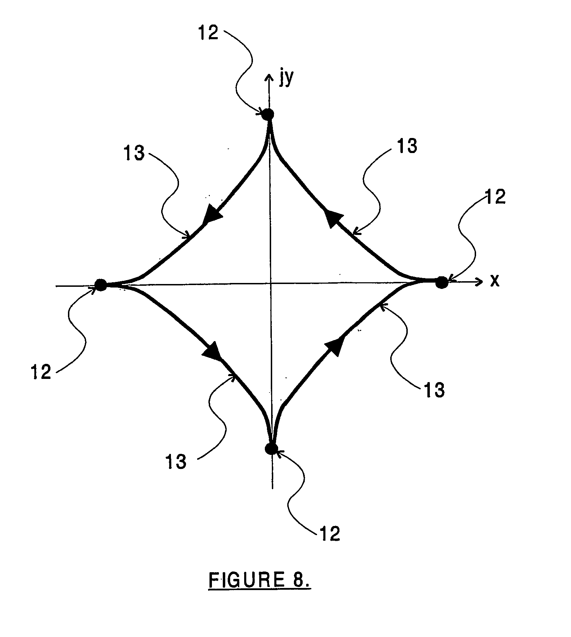

One amplitude and phasing variation policy which may be used with advantage is illustrated by the phasor diagram of Figure 8. In this diagram, dots 12 represent periods of constant (or varying linearly with time) phase which occur between interrogator signalling pulses (such as dips) or between periods of interrogator signalling when the label is backscattering a reply.

During the period of the signalling pulses, both the amplitude and phase of the interrogation carrier may change along one of the contours 13 of Figure 8. Furthermore, both the forward and reverse directions of the contours 13 may be used, possibly in a random arrangement.

An advantage of this type of signalling is that that the periodicity interval before a pattern of signalling is repeated is increased by a factor, in this case four, and prominent lines in the signalling spectrum may be advantageously shifted in frequency, thus resulting in sidebands having reduced amplitudes.

It is envisaged that the signalling scheme of the present invention will have application in both HF and UHF signalling.

In one preferred embodiment, useful at HF, at least some of the prominent signalling spectrum lines may be moved to fall a less stringently regulated portion of the frequency band. In yet another embodiment, useful at UHF, the contours shown in Figure 8 may be shaped to reduce far out side bands.

In another preferred embodiment, which is capable of simple realisation, only two phase resting points 12 in Figure 8 they be employed. Such a scheme may result in simplification of circuits used in the interrogator.

The invention is not limited to use of the amplitude and phase switching pattern illustrated in Figure 8, and it is envisaged that other amplitude and phase switching patterns may be used. Indeed, resting points 12 at different positions to those shown in Figure 8 are possible.

Movement between resting points may be in either direction. In one particular embodiment, successive resting points may be randomly distributed around a circle centred on the origin. This policy has the advantage that the sideband signalling spectrum for long signalling streams may be made uniformly low close to the interrogation carrier, and with an overall shaping determined by the Fourier transform of the unitary pulse.

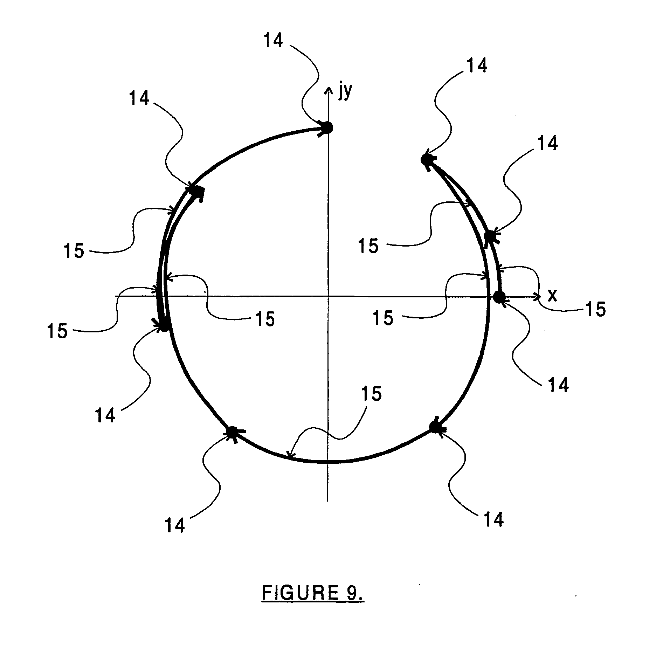

Referring now to Figure 9, there is shown an illustration of another amplitude and phase modulation policy according to another embodiment of the invention.

In Figure 9, points 14 represent the amplitude and phase of the interrogation carrier, relative to the amplitude and phase of an unmodulated 13.5 MHz signal, which occur at particular points in time at the beginning of a period of interrogator signalling. Such signalling may be either a single pulse or a pulse train. The arcs 15 represent the steadily changing amplitude and phase, relative to the same unmodulated constant frequency carrier signal, which occurs between the signalling intervals. In a particular embodiment there may be no amplitude modulation, but for convenience in Figure 9, these arcs have been slightly distorted so that each may be seen as distinct.

During the period between interrogator signalling, when the label may be backscattering a reply, there may be very little amplitude or phase modulation of the interrogation signal, although its frequency may be no longer in exactly 13.56 MHz, or there may be a slow phase modulation unaccompanied by high frequency noise, and the requirements for a low phase noise interrogation carrier are met. However, the initial phases of the interrogation signalling periods may be arranged, in the way illustrated, to occupy random positions on a circle centred on the origin, so that again the sidebands created by interrogator signalling take the form of a low amplitude spectral density rather than a discrete series of spectral lines. We derive the advantage that the interrogator dip depth may be increased or the interrogator carrier power may increased while electromagnetic compatibility compliance is still obtained.

The use of phase modulation of the interrogation carrier can be extended to cases beyond those in which there are resting points of no phase or frequency change to the situation in which the interrogation carrier is frequency modulated with a suitable modulating signal.

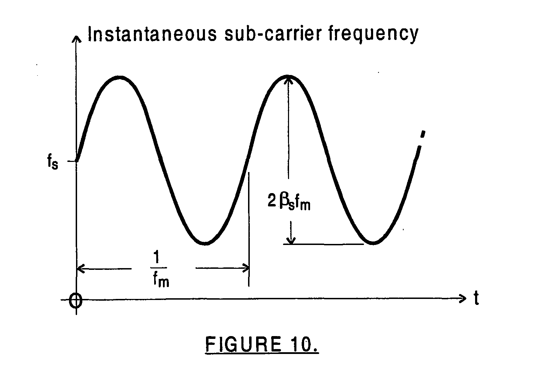

One particular advantageous situation is illustrated in Figure 10, in which the modulating signal has been selected to be a sub-carrier frequency of average value fₛ which is itself frequency or phase modulated with a modulating frequency fₘ and a modulation index βₛ.

It may be shown that such an interrogator frequency or phase modulation process will change the spectrum of the interrogation signal, previously illustrated in Figure 7(b), to one in which the signalling spectral lines are of much reduced spacing and very much reduced amplitude.

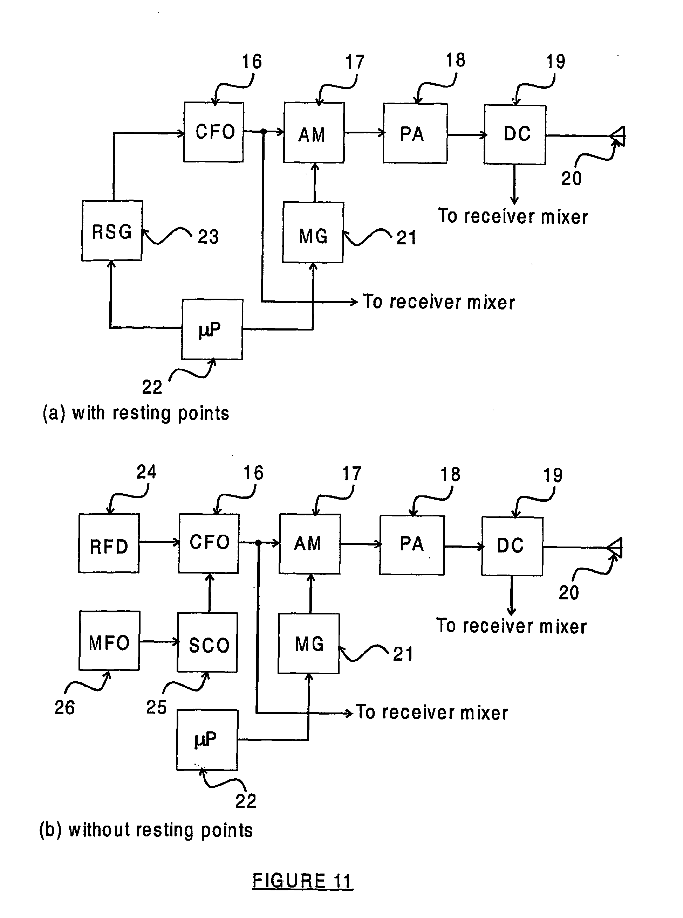

A block diagram of the transmitter 3 of an interrogator according to the present invention is provided in Figure 11 (a). In this diagram, a signal generator 16, which in the preferred form of the invention is a carrier frequency oscillator, generates an angle modulated carrier signal in the HF band.

Carrier frequency oscillator 16 has at its left a frequency modulation port which receives slowly varying frequency modulation signals from random signal generator 23. In this way, the angle modulation of the angle modulated carrier signal is able to be controllably varied according to the frequency modulation signals from the random signal generator.

Microprocessor 22 provides signals to the random signal generator 23 indicating when the output of the random signal generator 23 is to remain constant and when its output is allowed to vary, so that interrogation signal patterns of the type shown in Figure 9 may be obtained.

The angle modulated carrier signal is then amplitude modulated using an amplitude modulator 17 before being passed to power amplifier 18 and then via directional coupler 19 to transmitter antenna 20. The directional coupler 19 allows separation of an interrogation signal from a label reply signal, the latter being passed to a receiver of the interrogator as shown in the diagram.

The amplitude modulation provided by block 17 is in accord with signals provided by a message generator 21 that receives data from a microprocessor 22 which provides overall control of the interrogator.

A block diagram of the transmitter 3 of an interrogator according to an alternative embodiment of the present invention is provided in Figure 11 (b). In this diagram, carrier frequency oscillator 16 again generates an angle modulated carrier signal in the HF band. This signal is again amplitude modulated using amplitude modulator 17 before being passed to power amplifier 18.

Effectively, the output of the power amplifier represents the interrogator signal. The interrogator signal is then passed via directional coupler 19 to transmitter antenna 20 to thereby generate an interrogation field.

The directional coupler 19 again allows separation of an interrogation signal from a label reply signal, the latter being passed to a receiver of the interrogator as shown in the diagram.

The interrogator transmitter 3 may supply, as shown in Figure 11, to the receiver of an interrogator, not only a signal received in the antenna 20 and separated via directional coupler 19, but also a portion of the signal generated by carrier frequency oscillator 16 which may be used as a local oscillator in the interrogator receiver. The result is that the output signal which results from mixing the two signals so supplied is substantially unaffected by frequency or phase changes in the carrier frequency oscillator.

The carrier frequency oscillator may incorporate, or be supplied with, control signals from reference frequency device 24, so that the average frequency of the carrier frequency oscillator remains at the centre of the intended band, while the instantaneous frequency is varied by signals received from a sub-carrier oscillator 25, operating at an average sub-carrier frequency of fₛ.

The frequency of the sub-carrier oscillator 25 is varied in response to signals generated by modulation frequency oscillator 26 that is frequency modulated at a modulating frequency rate fₘ with modulation index βₛ. When the modulation frequency fₘ and the sub-carrier frequency fₛ are multiples of a fundamental frequency, for example 100 Hz, and the modulation index βₛ is suitably chosen, the signalling spectrum generated by carrier frequency oscillator 16 and amplitude modulator 17 will consist of low amplitude sidebands with frequency separation 100 Hz.

The frequency variation of the interrogation carrier will be small in relation to the modulation produced in label replies, and interrogator receivers of standard design may be used.

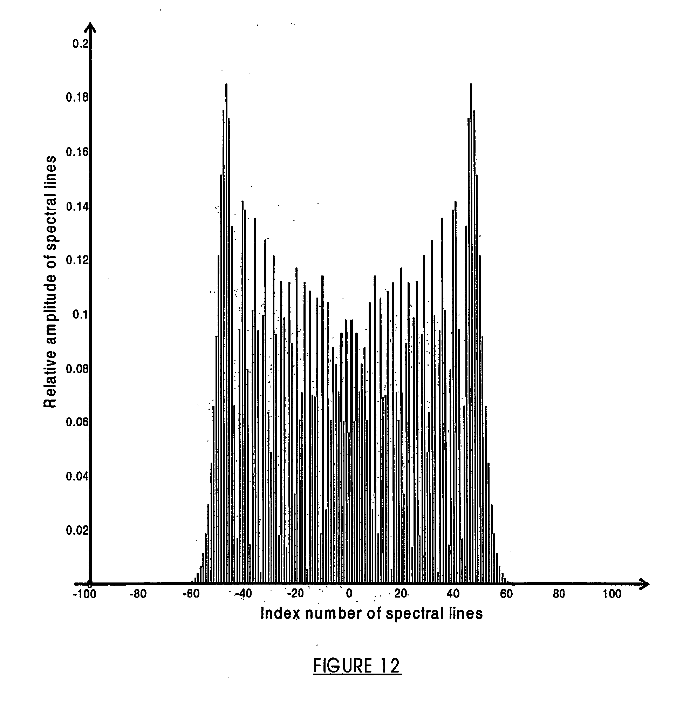

The effect of the angle modulation of the interrogator signal is demonstrated in one particular embodiment in Figure 12. In this embodiment, the carrier frequency oscillator 16 of Figure 11 is frequency modulated with a modulating frequency of 100 Hz and a peak frequency deviation of 5 kHz. Figure 12 shows that a single spectral line, such as one of those illustrated in Figure 7(b), considered to be of unit amplitude, is split into approximately 100 spectral lines of lesser amplitude, the greatest of which is approximately 15 dB below the original single line amplitude. As electromagnetic compatibility regulations normally apply to the greatest of the surviving spectral lines, we see that the strength of interrogation carrier could be increased by approximately 15 dB, and compliance will still be obtained. A substantial increase in label reading range would be the result.

It will be appreciated that various alterations, modifications and/or additions may be introduced into the constructions and arrangements of parts previously described without departing from the spirit or ambit of the present invention.

## Claims

1. A system for communicating between an interrogation device (2) and at least one electronic label device (1), the system including:
(a) an interrogation device (2) for generating an interrogation field using an interrogation signal, the interrogation signal containing angle modulation and amplitude modulation, the amplitude modulation encoding the interrogation signal with information for communication to one or more of the electronic labels (1); and
(b) one or more electronic labels (1), each of the one or more electronic labels being locatable within the interrogation field (2) and being capable of detecting and decoding the interrogation field so as to recover the information; **characterized in that** said interrogation device (2) includes a carrier signal generator (16) for generating an angle modulate carrier signal in the HF band, a random signal generator (23), a frequency modulation port of said carrier signal generator (16) for receiving slowly varying frequency modulation signals from said random signal generator (23), a microprocessor (22) for providing signals to the random signal generator (23) to indicate when the output of the random signal generator is to remain constant and when its output is allowed to vary whereby the angle modulation of said angle modulated carrier signal is controllably varied so that the interrogation signal has a frequency spectrum which includes sidebands having reduced amplitudes.

2. A system according to claim 1 wherein the interrogation device (2) includes:
(a) modulation means (17) for modulating the amplitude of the angle modulated carrier signal to provide the interrogation signal, the modulation encoding the interrogation signal with the information in the form of a plurality of symbols, each symbol being represented using a pattern of modulation in the amplitude of the interrogation signal ; and
(b) means (18, 19, 20) for converting the interrogation signal into the interrogation field.

3. A system according to claim 1 or 2 wherein said angle modulation occurs continuously.

4. A system according to claim 1 or 2 wherein said angle modulation occurs periodically such that the angle modulation includes resting points of no modulation.

5. A system according to any one of claims 1 to 4 wherein the angle modulation includes frequency modulation.

6. A system according to claim 5 wherein a sub-carrier signal is used to frequency modulate said frequency modulated carrier signal.

7. A system according to claim 6 wherein the sub-carrier signal is frequency modulated.

8. A method of communicating between an interrogation device (2) and at least one electronic label device (1), the method including :
i. (a) the interrogation device (2) generating an interrogation field using an interrogation signal, the interrogation signal containing angle modulation and amplitude modulation, the amplitude modulation encoding the interrogation signal with information for communication to one or more of the electronic labels (1); and
(b) one or more electronic labels (1) detecting and decoding the interrogation field to recover the information; **characterized by** generating an angle modulated carrier signal in the HF band by means of a carrier signal generator (16), providing slowly varying frequency modulations signals from a random signal generator (23), to said carrier signal generator (16) by means of a microprocessor (22) to indicate when the output of the random carrier signal generator (23) is to remain constant and when its output is allowed to vary whereby the angle modulation of said modulated carrier signal is controllably varied so that the interrogation signal has a frequency spectrum which includes sidebands having reduced amplitudes.

9. A method according to claim 8 wherein the generation of the interrogation field includes:
(a) modulating the amplitude of the angle modulated carrier signal to provide the interrogation signal, the modulation encoding the interrogation signal with the information in the form of a plurality of symbols, each symbol being represented using a pattern of modulation in the amplitude of the interrogation signal ; and
(b) converting the interrogation signal into the interrogation field.

10. A method according to claim 8 or 9 wherein said angle modulation occurs continuously.

11. A method according to claim 8 or 9 wherein said angle modulation occurs periodically such that the angle modulation includes resting points of no modulation.

12. A method according to any one of claims 8 to 11 wherein the angle modulation includes frequency modulation.

13. A method according to any one of claims 8 to 12 wherein a sub-carrier signal is used to frequency modulate said frequency modulated carrier signal.

14. A method according to claim 13 wherein the sub-carrier signal is frequency modulated.

15. An interrogation device (2) for communicating with at least one electronic label device (1), the interrogation device (2) including a transmitter (3) for generating an interrogation field using an interrogation signal, the interrogation signal containing angle modulation and amplitude modulation, wherein the amplitude modulation encodes the interrogation signal with information for communication to one or more of the electronic labels (1), and **characterized in that** the transmitter (3) is provided with a carrier signal generator (16) for generating an angle modulated carrier signal in the HF band, a random signal generator (23), a frequency modulation port of said carrier signal generator for receiving slowly varying frequency modulation signals from said random signal generator (23), a microprocessor (22) for providing signals to the random signal generator (23) to indicate when the output of the random signal generator is to remain constant and when its output is allowed to vary, whereby the angle modulation of said angle modulated carrier signal is controllably varied so as to reduce the amplitude of the sidebands of the interrogation signal compared with an equivalent interrogation signal containing no angle modulation.

16. An interrogation device according to claim 15 wherein the transmitter (3) includes:
(a) modulating means (17) for modulating the amplitude of the angle modulated carrier signal to provide the interrogation signal, the modulation encoding the interrogation signal with the information in the form of a plurality of symbols, each symbol being represented using a pattern of modulation in the amplitude of the interrogation signal ; and
(b) means (18, 19, 20) for converting the interrogation signal into the interrogation field.

17. A device according to claim 15 or 16 wherein said angle modulation occurs continuously.

18. A device according to claim 15 or 16 wherein said angle modulation occurs periodically such that the angle modulation includes resting points of no modulation.

19. A device according to any one of claims 15 to 18 wherein the angle modulation includes frequency modulation.

20. A device according to claim 19 wherein a sub-carrier signal is used to frequency modulate said frequency modulated carrier signal.

21. A device according to claim 20 wherein the sub-carrier signal is frequency modulated.

## Patentansprüche

1. System zur Kommunikation zwischen einem Abfragegerät (2) und zumindest einem elektronischen Etikett (1) enthaltend;
(a) ein Abfragegerät (2) zur Generierung eines Abfragefelds mittels eines Abfragesignals, wobei das Abfragesignal winkelmoduliert und amplitudenmoduliert ist, wobei die Amplitudenmodulation das Abfragesignal mit Informationen zur Kommunikation zu einem oder mehreren der elektronischen Etiketten (1) kodiert; und
(b) ein oder mehrere elektronische Etiketten (1), wobei jedes der einen oder mehreren elektronischen Etiketten innerhalb des Abfragefelds (2) angeordnet werden können und zur Detektierung und Entschlüsselung des Abfragefelds ausgebildet sind, um die Information wieder zu erhalten;
**dadurch gekennzeichnet, dass** das Abfragegerät (2) einen Trägersignalgenerator (16) enthält, um ein winkelmoduliertes Trägersignal im HF-Band zu generieren, einen Zufallssignalgenerator (23), einen Frequenzmodulationsanschluss des Trägersignalgenerators (16), um langsam verändernde Frequenzmodulationssignale vom Zufallssignalgenerator (23) zu empfangen, einen Mikroprozessor (22), um dem Zufallssignalgenerator (23) Signale zur Kennzeichnung zur Verfügung zur stellen, wann der Ausgang des Zufallssignalgenerators konstant zu bleiben hat und wann sein Ausgang sich verändern darf, wobei die Winkelmodulation des winkelmodulierten Trägersignals kontrolliert variiert wird, sodass das Abfragesignal ein Frequenzspektrum aufweist, welches Seitenbänder mit verkleinerten Amplituden enthält.

2. System nach Anspruch 1, wobei das Abfragegerät (2) enthält:
(a) Modulationsmittel (17) zur Modulation der Amplitude des winkelmodulierten Trägersignals zur Bereitstellung eines Abfragesignals, wobei die Modulation das Abfragesignal mit Informationen in Form von einer Vielzahl von Symbolen codiert, wobei jedes Symbol durch die Nutzung eines Amplitudenmodulationsmusters des Abfragesignals gebildet wird; und
(b) Mittel (18, 19, 20) zu Umwandlung des Abfragesignals in das Abfragefeld.

3. System nach Anspruch 1 oder 2, wobei die Winkelmodulation kontinuierlich erfolgt.

4. System nach Anspruch 1 oder 2, wobei die Winkelmodulation periodisch erfolgt, sodass die Winkelmodulation Ruhepunkte ohne Modulation enthält.

5. System nach einem der Ansprüche 1 -4, wobei die Winkelmodulation eine Frequenzmodulation beinhaltet.

6. System nach Anspruch 5, wobei ein Zwischenträgersignal zur Frequenzmodulation des frequenzmodulierten Trägersignals genutzt wird.

7. System nach Anspruch 6, wobei das Zwischenträgersignal frequenzmoduliert ist.

8. Verfahren zur Kommunikation zwischen einem Abfragegerät (2) und zumindest einem elektronischen Etikett (1), wobei das Verfahren beinhaltet:
(a) das Abfragegerät (2) generiert ein Abfragefeld mittels eines Abfragesignals, wobei das Abfragesignal Winkelmodulation und Amplitudenmodulation enthält, wobei die Amplitudenmodulation das Abfragesignal mit Informationen zur Kommunikation mit einem oder mehreren der elektronischen Etiketten (1) kodiert; und
(b) ein oder mehrere elektronische Etiketten (1), die das Abfragefeld zur Wiedergewinnung von Informationen detektieren und entschlüsseln; **dadurch gekennzeichnet, dass** ein winkelmoduliertes Trägersignal im HF-Band durch einen Trägersignalgenerator (16) erzeugt wird, dass ein langsam variierendes Frequenamodulationssignal von einem Zuflusssignalgenerator (23) dem Trägersignalgenerator (16) mittels eines Mikroprozessors (22) zur Verfügung gestellt wird, um anzugeben, wann der Ausgang des Zufallsträgersignalgenerators (23) konstant zu bleiben hat und wann sein Ausgang sich verändern darf, wobei die Winkelmodulation des modulierten Trägersignals gesteuert verändert wird, sodass das Abfragesignal ein Frequenzspektrum aufweist, das Seitenbänder mit verringerten Amplituden beinhaltet.

9. Verfahren nach Anspruch 8, wobei die Erzeugung des Abfragefeldes umfasst:
(a) die Modulation der Amplitude des winkelmodulierten Trägersignals, um ein Abfragesignal bereitzustellen, wobei die Modulation das Abfragesignal mit Informationen in Form einer Vielzahl von Symbolen kodiert, wobei jedes Symbol durch die Nutzung eines Amplitudenmodulationsmusters des Abfragesignals gebildet wird, und
(b) die Umwandlung des Abfragesignals in das Abfragefeld.

10. Verfahren nach Anspruch 8 oder 9, wobei die Winkelmodulation kontinuierlich erfolgt.

11. Verfahren nach Anspruch 8 oder 9, wobei die Winkelmodulation kontinuierlich erfolgt, sodass die Winkelmodulation Ruhepunkte ohne Modulation enthält.

12. Verfahren nach einem der Ansprüche 8-11, wobei die Winkelmodulation eine Frequenzmodulation beinhaltet.

13. Verfahren nach einem der Ansprüche B - 12, wobei ein Zwischenträgersignal zur Frequenzmodulation des frequenzmodulierten Trägersignals genutzt wird.

14. Verfahren nach Anspruch 13, wobei das Zwischenträgarsignal frequenzmoduliert ist.

15. Abfragegerät (2) zur Kommunikation mit zumindest einem elektronischen Etikett (1), wobei das Abfragegerät (2) einen Sender (3) zur Erzeugung eines Abfragefelds mittels eines Abfragesignals enthält, wobei das Abfragesignal eine Winkelmodulation und eine Amplitudenmodulation enthält, wobei die Amplitudenmodulation das Abfragesignal mit Informationen zur Kommunikation mit einem oder mehreren elektronischen Etiketten (1) kodiert, **dadurch gekennzeichnet, dass** der Sender (3) mit einem Trägersignalgenerator (16) zur Erzeugung eines winkelmodulierten Trägersignals im HF-Band versehen ist, mit einem Zufallssignalgenerator (23), einem Frequenzmodulationsanschluss des Trägersignalgenerators zum Empfangen von sich langsam verändernden Frequenzmodulationssignalen vom Zufallssignalgenerator (23), einem Mikroprozessor (22) zum Bereitstellen von Signalen an den Zufallssignalgenerator (23), um anzugeben, wann der Ausgang des Zufallssignalgenerators konstant zu bleiben hat und wann sein Ausgang sich verändern darf, wobei die Winkelmodulation des winkelmodulierten Trägersignals derart gesteuert verändert wird, um die Amplitude der Seitenbänder des Abfragesignals im Vergleich zu einem äquivalenten Abfragesignal, das keine Winkelmodulation enthält, zu reduzieren.

16. Abfragegerät gemäß Anspruch 15, wobei der Sender (3) umfasst
(a) Modulationsmittel (17) zur Modulierung der Amplitude des winkelmodulierten Trägersignals zur Bereitstellung des Abfragesignals, wobei die Modulation das Abfragesignal mit Informationen in Form einer Vielzahl von Symbolen kodiert, wobei jedes Symbol durch die Nutzung eines Amplitudenmodulationsmusters des Abfragesignals gebildet wird; und
(b) Mittel (18, 19, 20) zur Umwandlung des Abfragesignals in das Abfragefeld.

17. Gerät nach Anspruch 15 oder 16, wobei die Winkelmodulation kontinuierlich erfolgt.

18. Gerät gemäß Anspruch 15 oder 16, wobei die Winkelmodulation periodisch derart erfolgt, dass die Winkelmodulation Ruhepunkte ohne Modulation enthält.

19. Gerät gemäß einem der Ansprüche 15 - 18, wobei die Winkelmodulation eine Frequenzmodulation beinhaltet.

20. Gerät gemäß Anspruch 19, wobei ein Zwischenträgersignal zur Frequenzmodulation des frequenzmodulierten Trägersignals genutzt wird.

21. Gerät gemäß Anspruch 20, wobei das Zwischenträgersignal frequenzmoduliert ist.

## Revendications

1. Système de communication entre un dispositif d'interrogation (2) et un ou plusieurs dispositifs d'étiquetage électronique (1) comprenant :
(a) un dispositif d'interrogation (2) qui génère un champ d'interrogation utilisant un signal d'interrogation, le signal d'interrogation contenant une modulation angulaire et une modulation d'amplitude, la modulation d'amplitude encodant le signal d'interrogation avec une information qui permet une communication entre une ou plusieurs étiquettes électroniques (1) ; et
(b) une ou plusieurs étiquettes (1), chacune de ces étiquettes étant localisable à l'intérieur du champ d'interrogation (2) et étant capable de détecter et de décoder le champ d'interrogation de manière à récupérer une information ;
**caractérisé en ce que** ledit dispositif d'interrogation (2) comprend un générateur de signal porteur (16) qui génère un signal porteur HF à modulation angulaire, un générateur de signal aléatoire (23), un port en modulation de fréquence appartenant au dit générateur de signal porteur (16) qui permet de recevoir des signaux dont la modulation de fréquence varie lentement en provenance dudit générateur de signal aléatoire (23), un microprocesseur (22) qui fournit des signaux au générateur de signal aléatoire (23) pour indiquer quand la sortie du générateur de signal aléatoire doit rester constante et quand sa sortie peut varier, microprocesseur par le biais duquel la modulation angulaire dudit signal porteur à modulation angulaire varie de manière contrôlée de manière à ce que le signal d'interrogation ait un spectre de fréquences qui inclue des bandes latérales à amplitudes réduites.

2. Système selon la revendication 1 dans lequel le dispositif d'interrogation (2) comprend :
(a) une méthode de modulation (17) qui module l'amplitude du signal porteur à modulation angulaire pour fournir le signal d'interrogation, la modulation encodant le signal d'interrogation avec une information qui prend la forme de plusieurs symboles, chaque symbole étant représenté en utilisant un motif de modulation qui appartient à l'amplitude du signal d' interrogation ; et
(b) une méthode (18, 19, 20) pour convertir le signal d'interrogation dans le champ d'interrogation.

3. Système selon les revendications 1 ou 2 dans lequel ladite modulation angulaire se produit continuellement.

4. Système selon les revendications 1 ou 2 dans lequel ladite modulation angulaire se produit périodiquement de manière à ménager des points de repos correspondant à une absence de modulation.

5. Système selon une des revendications 1 à 4 dans lequel la modulation angulaire comprend une modulation de fréquence.

6. Système selon la revendication 5 dans lequel un signal sous-porteur est utilisé pour moduler en fréquence ledit signal porteur modulé en fréquence.

7. Système selon la revendication 6 dans lequel le signal sous-porteur est modulé en fréquence.

8. Méthode de communication entre un dispositif d'interrogation (2) et un ou plusieurs dispositifs d'étiquetage électronique (1) comprenant :
(a) un dispositif d'interrogation (2) qui génère un champ d'interrogation utilisant un signal d'interrogation, le signal d'interrogation contenant une modulation angulaire et une modulation d'amplitude, la modulation d'amplitude encodant le signal d'interrogation avec une information pour que celle-ci soit communiquée à une ou plusieurs étiquettes électroniques (1); et
(b) une ou plusieurs étiquettes (1), qui détectent et décodent le champ d'interrogation de manière à récupérer l'information;
**caractérisée en ce qu'**elle génère un signal porteur HF à modulation angulaire par le biais d'un générateur de signal porteur (16), qui fournit des signaux dont la modulation de fréquence varie lentement en provenance dudit générateur de signal aléatoire (23), vers ledit générateur de signal porteur (16) par le biais d'un microprocesseur (22) pour indiquer quand la sortie du générateur de signal aléatoire (23) doit rester constante et quand sa sortie peut varier, microprocesseur par le biais duquel la modulation angulaire dudit signal porteur à modulation angulaire varie de manière contrôlée de manière à ce que le signal d'interrogation ait un spectre de fréquences qui inclue des bandes latérales à amplitudes réduites.

9. Méthode selon la revendication 8 dans laquelle la génération du signal d'interrogation comprend :
(a) une modulation de l'amplitude du signal porteur à modulation angulaire pour fournir le signal d'interrogation, la modulation encodant le signal d'interrogation avec une information qui prend la forme de plusieurs symboles, chaque symbole étant représenté en utilisant un motif de modulation qui appartient à l'amplitude du signal d'interrogation ; et
(b) la conversion du signal d'interrogation dans le champ d'interrogation.

10. Méthode selon les revendications 8 ou 9 dans laquelle ladite modulation angulaire se produit continuellement.

11. Méthode selon les revendications 8 ou 9 dans laquelle ladite modulation angulaire se produit périodiquement de manière à ménager des points de repos correspondant à une absence de modulation,

12. Méthode selon les revendications 8 à 11 dans laquelle la modulation angulaire comprend une modulation de fréquence.

13. Système selon la revendication 8 à 12 dans lequel un signal sous-porteur est utilisé pour moduler en fréquence ledit signal porteur modulé en fréquence.

14. Système selon la revendication 13 dans lequel le signal sous-porteur est modulé en fréquence.

15. Dispositif d'interrogation (2) pour communiquer avec un ou plusieurs dispositifs d'étiquetage électronique (1), le dispositif d'interrogation (2) comprenant un émetteur (3) qui génère un champ d'interrogation utilisant un signal d'interrogation, le signal d'interrogation contenant un modulation angulaire et une modulation d'amplitude, dans lequel la modulation d'amplitude encode le signal d'interrogation avec une information pour que celle-ci soit communiquée à une ou plusieurs étiquettes électroniques (1), et **caractérisé en ce que** l'émetteur (3) est pourvu d'un générateur de signal porteur (16) qui génère un signal porteur HF à modulation angulaire, d'un générateur de signal aléatoire (23), d'un port en modulation de fréquence appartenant au dit générateur de signal porteur (16) qui permet de recevoir des signaux dont la modulation de fréquence varie lentement en provenance dudit générateur de signal aléatoire (23), et d'un microprocesseur (22) qui fournit des signaux au générateur de signal aléatoire (23) pour indiquer quand la sortie du générateur de signal aléatoire doit rester constante et quand sa sortie peut varier, microprocesseur par le biais duquel la modulation angulaire dudit signal porteur à modulation angulaire varie de manière contrôlée afin de réduire l'amplitude des bandes latérales du signal d'interrogation, par comparaison à un signal d'interrogation équivalent ne présentant pas de modulation angulaire.

16. Dispositif d'interrogation selon la revendication 15 dans lequel l'émetteur (3) comprend :
(a) une méthode de modulation (17) qui module l'amplitude du signal porteur à modulation angulaire pour fournir le signal d'interrogation, la modulation encodant le signal d'interrogation avec une information qui prend la forme de plusieurs symboles, chaque symbole étant représenté en utilisant un motif de modulation qui appartient à l'amplitude du signal d'interrogation ; et
(b) une méthode (18, 19, 20) pour convertir le signal d'interrogation dans le champ d'interrogation,

17. Dispositif selon les revendications 15 ou 16 dans lequel ladite modulation angulaire se produit continuellement.

18. Dispositif selon les revendications 15 ou 16 dans laquelle ladite modulation angulaire se produit périodiquement de manière à ménager des points de repos correspondant à une absence de modulation.

19. Méthode selon les revendications 15 à 18 dans laquelle la modulation angulaire comprend une modulation de fréquence.

20. Système selon la revendication 19 dans lequel un signal sous-porteur est utilisé pour moduler en fréquence ledit signal porteur modulé en fréquence,

21. Système selon la revendication 20 dans lequel le signal sous-porteur est modulé en fréquence,
